# EUROPEAN PATENT SPECIFICATION

(11) **EP 2 548 795 B1**
(45) Date of publication and mention of the grant of the patent: **04.01.2017**
(21) Application number: 11755805.6
(22) Date of filing: 31.01.2011
(51) Int. Cl.: B62M 6/45, B62M 6/50

(54) **METHOD AND DEVICE FOR CONTROLLING MOTOR FOR ELECTRICALLY ASSISTED BICYCLE**
VERFAHREN UND VORRICHTUNG ZUR STEUERUNG EINES MOTORS FÜR EIN ELEKTROFAHRRAD
PROCÉDÉ ET DISPOSITIF POUR COMMANDER UN MOTEUR DE BICYCLETTE À ASSISTANCE ÉLECTRIQUE

(30) Priority: 17.03.2010 JP 2010060038
(43) Date of publication of application: 23.01.2013
(73) Proprietor: Panasonic Corporation, Kadoma-shi Osaka 571-8501 (JP)
(72) Inventor: EDATSUNE, Masamitsu, Osaka-shi, Osaka 540-6207 (JP); YOSHIMURA, Masaya, Osaka-shi, Osaka 540-6207 (JP)
(74) Representative: Grünecker Patent- und Rechtsanwälte PartG mbB
(86) International application number: PCT/JP2011/000502
(87) International publication number: WO 2011/114612

(56) References cited:
- JP-A- 8 091 280
- JP-A- 9 076 983
- JP-A- 11 278 360
- JP-A- 11 314 592
- JP-A- H08 230 754
- JP-A- 2001 199 378
- JP-A- 2002 240 773
- JP-A- 2004 025 913
- JP-A- 2007 223 579
- US-A- 5 798 702
- US-A- 5 922 035
- MASATOKU KOKAYU: "Regulations on Electric Bicycles in Japan", CONFERENCE OF SAFETY POPULARIZATION FOR ELECTRIC ASSIST BICYCLES, 1 April 2001 (2001-04-01),

## Description

### Technical Field

The present invention relates to a method and device for controlling a motor for an electrically assisted bicycle which assist the output of a bicycle by means of an electric motor.

### Background Art

The published Japanese patent application JP 2007 223579 A represents the closest prior art in accordance with the preamble of claims 1 and 3, and a method and a device for controlling an electric motor bicycle. Two different voltages V1, V2 may be applied to a motor control unit for a short time in order to measure the respective currents Im1, Im2 with a motor current measuring unit and based thereon calculate the respective motor torques Tm1, Tm2. Moreover, voltages applied to the motor control unit may be Vxa1 and Vxa2 with a=[1,7], and based on the voltage values Vxa1 and Vxa2 at which the measured motor currents Im1 and Im2 are zero the rotational speeds Nx1 and Nx2 of the motor may be calculated by N×1=V×a1/Ks and Nx2=Vxa2/Ks, wherein Ks is a motor specific constant. Based on these values a human-powered torque may be calculated by Ta=(N×2·Tm1-N×1·Tm2)/(N×1-N×2). An assistance torque may be calculated by Tasi=f·Ta, wherein f is a subsidy rate, and the assistance voltage Vasi for generating Tasi requires the current value of the motor to be Imasi=Tasi/Kt, wherein Kt is a proportionality constant specific to the motor.

An electrically assisted bicycle generates a bicycle output, which is a driving force of a bicycle, by integrating the output of an electric motor with a pedal force generated by pedaling. The electric motor varies in output according to a pedal force and controls an assist ratio.

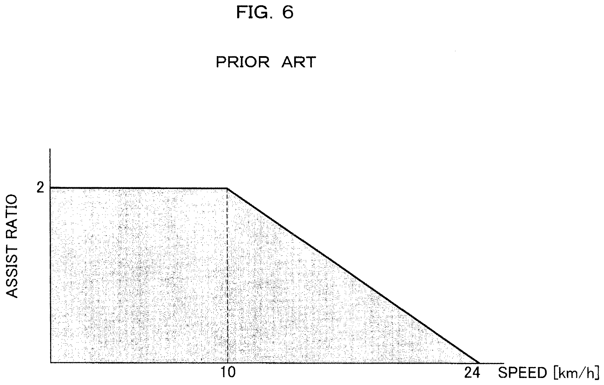

Referring to FIG. 6, a conventional method for controlling an electric motor will be described below.

FIG. 6 is an explanatory drawing showing regulations concerning an assist ratio of a motor for an electrically assisted bicycle.

As shown in FIG. 6, an assist ratio of a motor for an electrically assisted bicycle is regulated according to a speed. For example, at a bicycle speed of 0 km/h to 10 km/h, an assist ratio is mandated to be 2 or less with respect to a pedal force. From 10 km/h to 24 km/h, an upper limit to an assist ratio is lowered with an increase in speed. At a speed of 24 km/h or higher, electric motor assist is prohibited.

To ensure compliance with the regulations concerning an assist ratio, a motor with a constant output capability is conventionally used. An input current to the motor is controlled according to a speed and the output of the motor is set according to a pedal force, so that an assist ratio is controlled according to a speed.

For example, an electric motor with an output capability of 26 V is used. An amount of current inputted to the electric motor and the duty of power input are adjusted, and the output value of the electric motor is controlled according to a pedal force. Specifically, an electric motor having large motor characteristics is used, an amount of current passing through the electric motor is controlled according to a speed to reduce apparent motor characteristics, and the output value of the electric motor is controlled according to a pedal force. Thus, the motor output is controlled to obtain an assist ratio in compliance with the regulations (see Patent Literature 1).

### Citation List

### Patent Literature

Patent Literature 1: Japanese Patent Laid-Open No. 10-59260

### Summary of Invention

### Technical Problem

In a conventional method for controlling an electric motor, during the control of a current amount, an increase or decrease in current amount is adjusted while an actual current amount is measured by a current sensor. Thus, in the case where a measured current amount is smaller than an actual current amount due to failures of the current sensor, the current amount increases more than necessary, leading to excessive assistance. Particularly, excessive assistance causes an extremely high speed, leading to unsafe riding.

In order to solve the problem, an object of a method for controlling a motor for an electrically assisted bicycle according to the present invention is to prevent an electric motor from providing excessive assistance.

### Solution to Problem

In order to attain the object, a method for controlling a motor for an electrically assisted bicycle according to the present invention includes: estimating the relationship between a vehicle speed and a pedal force under constant riding conditions; calculating an input voltage to the motor beforehand according to the vehicle speed such that an assist ratio is compliant with a standard for the vehicle speed; measuring the vehicle speed; providing motor assistance according to the pedal force while fixing, to a first voltage, the input voltage to the motor in a low-speed region where a constant assist ratio is specified by the standard; changing the input voltage from a second voltage to a third voltage in proportion to the vehicle speed in a vehicle-speed region serving as a high-speed gradual decrease part of the standard; and stopping a motor output by fixing the input voltage to the third voltage in a region having a higher vehicle speed than the high-speed gradual decrease part, characterized in that the first voltage is a maximum output voltage of the motor, and the third voltage allows the motor output to become 0 at a maximum vehicle speed of the high-speed gradual decrease part.

The vehicle speed may be determined according to the rotational speed of one of a wheel and a pedal of the bicycle.

A device for controlling a motor for an electrically assisted bicycle according to the present invention, includes: a motor that assists driving of the bicycle; a speed sensor that measures a vehicle speed; and a voltage control unit that controls an input voltage to the motor according to the vehicle speed, characterized in that a motor output is controlled by the input voltage to an output satisfying an assist ratio specified by a standard, according to a pedal force estimated from the vehicle speed.

The speed sensor may include a rotation sensor that measures the rotational speed of one of a wheel and a pedal of the bicycle or the rotational speed of the motor, and the vehicle speed may be calculated from the rotational speed.

### Advantageous Effect of Invention

As has been discussed, the characteristic of an electric motor is controlled by an input voltage, thereby preventing the electric motor from providing excessive assistance.

### Brief Description of Drawings

[FIG. 1] FIG. 1 illustrates the configuration of a control device of a motor for an electrically assisted bicycle according to the present invention.
[FIG. 2] FIG. 2 is an explanatory drawing showing states of control of motor characteristics according to the present invention.
[FIG. 3] FIG. 3 is an explanatory drawing illustrating a conventional configuration for controlling a motor output.
[FIG. 4] FIG. 4 shows the relationship between a motor output and an assist ratio.
[FIG. 5] FIG. 5 is an explanatory drawing showing a change of a motor output depending on an input voltage according to the present invention.
[FIG. 6] FIG. 6 is an explanatory drawing showing regulations concerning an assist ratio of a motor for an electrically assisted bicycle.

### Description of Embodiments

As has been discussed, an upper limit to an assist ratio of an electric motor is regulated according to a speed by predetermined standards of regulations. The assist ratio is controlled by controlling a motor output by means of an electric motor with a constant output capability. Conventionally, a motor output is controlled according to an amount of input current and a pedal force, whereas in the present invention, a motor output is controlled by an input voltage. Furthermore, a maximum pedal force is estimated for each speed range under predetermined riding conditions, a maximum motor output compliant with the regulations at the estimated pedal force is calculated, and an input voltage is controlled such that each speed range has the calculated motor output. Since a motor output is controlled in this way and assistance is provided according to a motor output calculated for each speed range, an assist ratio can be kept compliant with the regulations at the estimated pedal force.

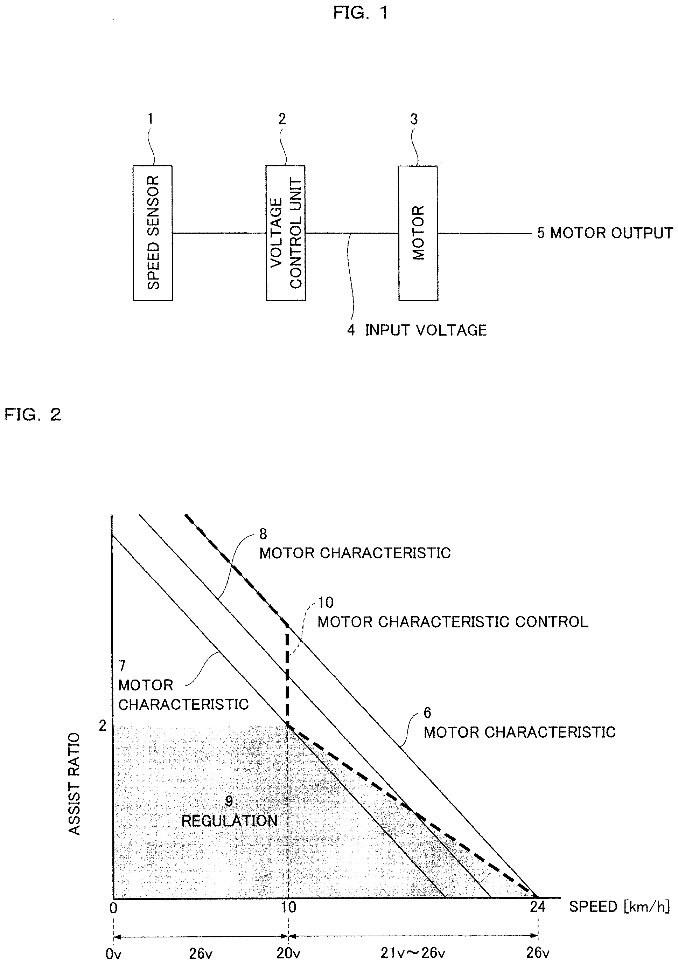

Referring to FIGS. 1 to 5, a specific example of a method for controlling a motor for an electrically assisted bicycle according to the present invention will be described in detail.

FIG. 1 illustrates the configuration of a control device of a motor for an electrically assisted bicycle according to the present invention. FIG. 2 is an explanatory drawing showing states of control of motor characteristics according to the present invention.

In FIG. 2, reference numeral 9 denotes regulations, an example of standards regulating an assist ratio. The assist ratio of the motor needs to be set within the range of the regulations 9 with respect to a pedal force.

According to the present invention, as indicated by a motor characteristic 6, a motor output for securing an assist ratio in a high-speed range is obtained by using an electric motor having a larger motor characteristic than a reduction rate of a high-speed gradual decrease part that is set at an upper limit value in the range of 10 km/h to 24 km/h of the regulations 9. For example, a typical electric motor with an output of 26 V is conventionally used.

First, an assist ratio is regulated by a vehicle speed and thus a speed sensor 1 monitors the speed of a bicycle.

Assuming that a motor with an output capability of 26 V is used, at a vehicle speed of 0 km/h to 10 km/h, an input voltage 4 to a motor 3 is set to 26 V and an apparent motor characteristic is controlled to the motor characteristic 6 by a voltage control unit 2. The motor output is made proportionate to a pedal force according to the motor characteristic 6 on which the input voltage 4 is set to 26 V. Thus, the assist ratio can be doubled from the pedal force.

At a vehicle speed of 10 km/h to 24 km/h, the input voltage 4 is increased from 20 V according to a speed. At a vehicle speed of 24 km/h, the voltage control unit 2 is controlled to set the input voltage 4 to 26 V and the apparent motor characteristic is set to a motor characteristic 8. The input voltage of the motor 3 is increased with a speed to control the motor characteristic, enabling a motor output corresponding to the speed in accordance with the high-speed gradual decrease part of the regulations 9. At a vehicle speed of 10 km/h, the regulations 9 can be satisfied by providing assistance using the motor 3 having an apparent output characteristic of 20 V (motor characteristic 7) with respect to a maximum pedal force estimated under the predetermined riding conditions. Thus, at a vehicle speed of 10 km/h, the input voltage is adjusted so as to set the motor output to 20 V. At a vehicle speed of 24 km/h, the input voltage 4 is set to 26 V and the assist ratio is set to 0. In a speed range of 24 km/h or higher, the input voltage 4 is kept at 26 V and the assistance of the electric motor is stopped.

The input voltage 4 of the motor 3 is controlled according to a speed, achieving the same effect as in the case where an assist ratio is controlled by using a motor having a motor characteristic 10 in compliance with the regulations serving as standards.

In this explanation, the input voltage is increased in proportion to a speed to obtain an assist ratio in compliance with the standards. For some characteristics of a used motor, an input voltage may be reduced with an increase in speed to obtain an assist ratio compliant with the standards.

A conventional method for controlling a motor output according to an input current will be specifically described below for comparison with the effect of the present invention.

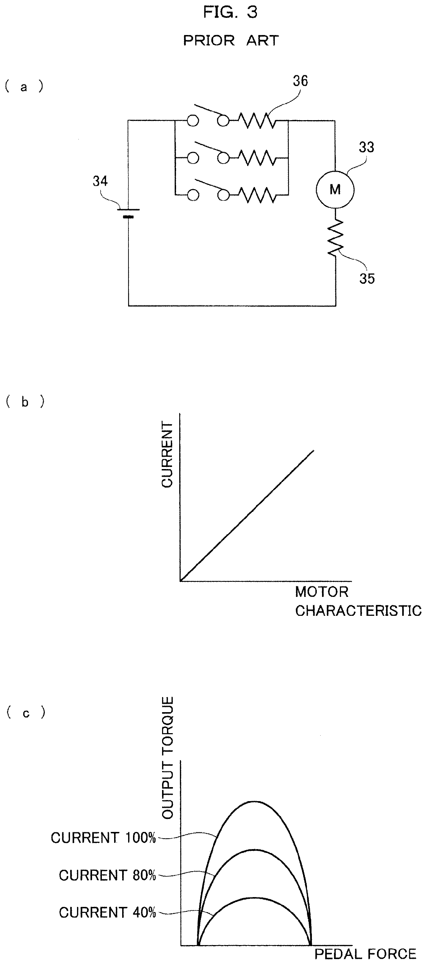

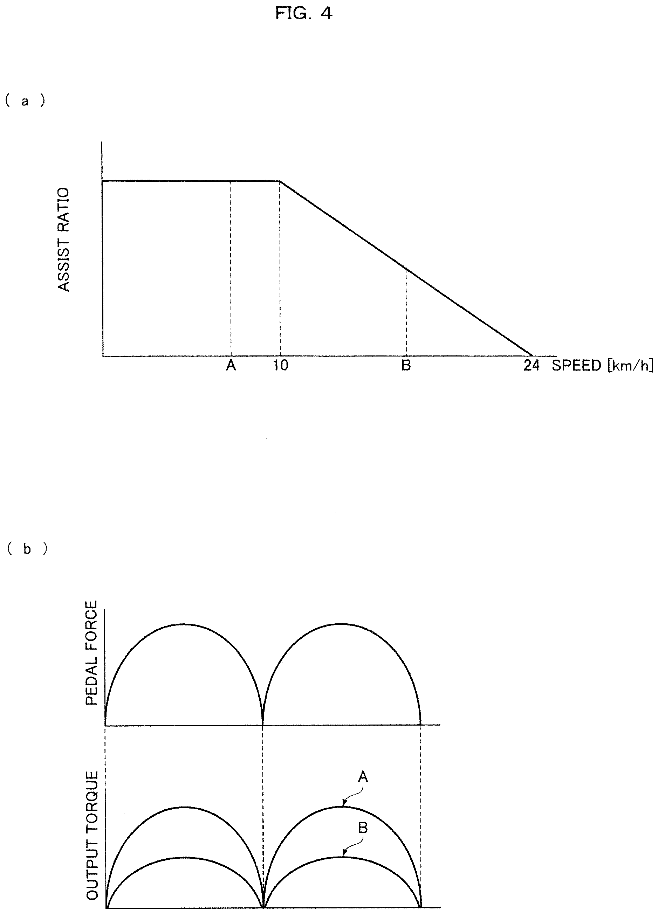

FIG. 3 is an explanatory drawing illustrating a conventional configuration for controlling a motor output. FIG. 3(a) is a circuit diagram illustrating the control configuration of a motor output. FIG. 3(b) shows the relationship between a current inputted to an electric motor and output torque. FIG. 3(c) illustrates the relationship between an input current and a motor characteristic. FIG. 4 shows the relationship between a motor output and an assist ratio. FIG. 4(a) shows the relationship between a speed and a required assist ratio. FIG. 4(b) shows the relationship between a pedal force and a motor output.

As shown in FIG. 3(a), in the conventional control configuration of a motor characteristic, a motor 33 is connected to a power supply 34, and a current sensor 35 and a current control circuit 36 are connected in series between the motor 33 and the power supply 34. The current control circuit 36 includes a plurality of units arranged in parallel, each of which includes a switch and a resistor arranged in series. In the conventional motor characteristic control circuit, a current value inputted to the motor 33 is measured by the current sensor 35 and the switches of the current control circuit 36 are opened or closed to obtain a predetermined current value.

As shown in FIG. 3(b), the motor characteristic increases or decreases in proportion to an input current. Hence, as shown in FIG. 3(c), the output motor characteristic is controlled depending on the ratio of an input current to a maximum input current. In FIG. 3(c), the maximum input current is 100%. Furthermore, FIG. 3(c) shows current characteristics at an input current of 40% and an input current of 80% relative to the maximum input current.

The motor characteristic is controlled by using an input current according to a vehicle speed, so that an assist ratio is controlled according to a speed as shown in FIG. 4(a). Specifically, at A having a vehicle speed of 10 km/h or less, the current control circuit 36 is controlled to set the input current of the motor 33 to 80% of the maximum input current, thereby controlling the output of the motor 33 relative to a pedal force as shown in FIG. 4(b). At B having a vehicle speed of 10 km/h to 24 km/h, the current control circuit 36 is controlled to set the input current of the motor 33 to 40% of the maximum input current, thereby controlling the output of the motor 33 relative to a pedal force as shown in FIG. 4(b).

In the conventional method for controlling a motor characteristic according to an input current, in the event of a failure of the current sensor 35, excessive assistance is provided, leading to unsafe riding. For example, in the case where the current sensor 35 fails and detects a lower value than an actual current value, the current control circuit 36 keeps raising the current value, which may increase the motor characteristic more than necessary. If the control of the current control circuit 36 continues, the motor characteristic keeps rising and causes an excessive access ratio, which may lead to unsafe riding, e.g., an overspeed.

In the method and device for controlling a motor according to the present invention, as has been discussed, a motor characteristic is controlled according to an input voltage. Thus, even if the control device fails, an upper limit to an input voltage does not extremely increase an assist ratio.

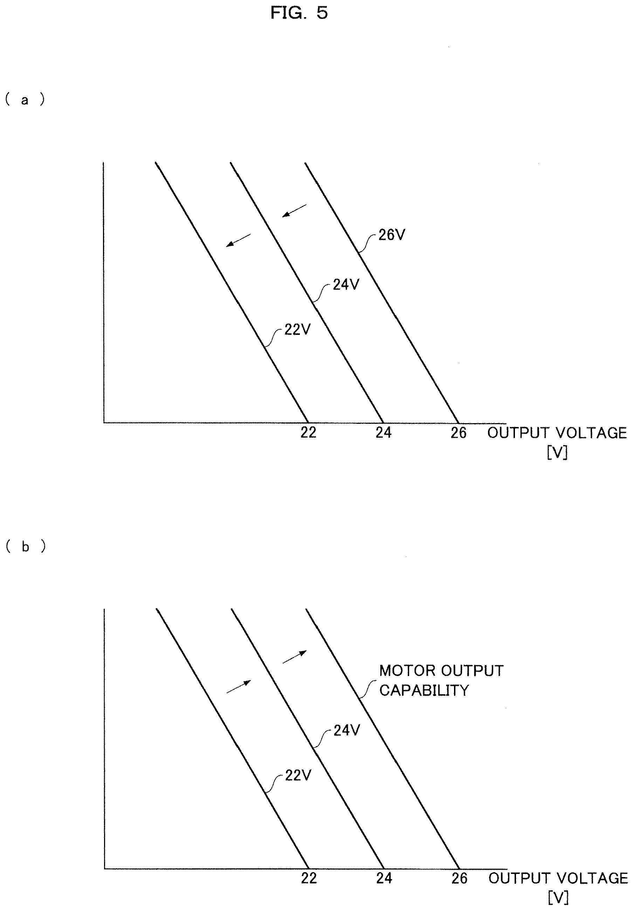

Referring to FIG. 5, the method and device according to the present invention will be described below. FIG. 5 is an explanatory drawing showing a change of a motor output depending on an input voltage according to the present invention.

As shown in FIG. 5, in the case where the voltage sensor of the voltage control unit 2 fails and detects a higher voltage than an actual voltage, the input voltage is controlled to a lower voltage, for example, from 26 V to 24 V or from 24 V to 22 V, which does not extremely increase an assist ratio (FIG. 5(a)). In the case where the voltage sensor fails and detects a lower voltage than an actual voltage, the input voltage is controlled to a higher voltage, for example, from 22 V to 24 V or from 24 V to 26 V. In order to obtain an assist ratio of 0 at a motor output corresponding to a vehicle speed of 24 km/h, the motor 3 with a corresponding output capability is used. Thus, even when the input voltage increases, the motor output is not increased any more. Thus, even if an input voltage is erroneously recognized, an assist ratio is not excessively increased. Specifically, as has been discussed, in the case where the motor 3 with an output capability of 26 V is used, the input voltage is controlled to 26 V at a vehicle speed of 24 km/h; meanwhile, the assistance is stopped. Thus, in the case where the voltage sensor detects a lower voltage than an actual voltage, the voltage control unit 2 increases the voltage, allowing the input voltage to exceed 26 V. Even in this case, the motor 3 has an output capability of 26 V and thus the motor output does not exceed 26 V. At a vehicle speed of at least 24 km/h, the assistance is stopped. Therefore, even if an input voltage is erroneously recognized, an assist ratio is not excessively increased, thereby keeping safe riding.

In this explanation, the motor with an output capability of 26 V is used. At a maximum vehicle speed or lower where a constant assist ratio is accepted, the input voltage is controlled to 26 V. The input voltage is then increased from 20 V in proportion to a speed and reaches 26 V at the maximum vehicle speed where assistance is accepted by the regulations serving as standards. The output capability of the motor is not limited to 26 V and can be freely determined as long as the assist ratio can be regulated by the regulations. Furthermore, the input voltage can be determined according to a speed.

In this example, the assist ratio is 0 at a vehicle speed of 24 km/h. In order to reliably regulate the assist ratio within the standards, the assist ratio may become 0 at a vehicle speed lower than 24 km/h. Furthermore, in each vehicle speed range, the input voltage can be controlled such that the assist ratio has a margin with respect to a standard upper limit value.

Although a vehicle speed is measured by the speed sensor, a rotational speed sensor may be used to calculate the rotational speed of a wheel or pedal or the rotational speed of the motor to calculate a vehicle speed based on the rotational speed.

### Industrial Applicability

The present invention is useful for a method and device for controlling a motor for an electrically assisted bicycle which can prevent an electric motor from providing excessive assistance and allows the electric motor to assist the output of a bicycle.

## Claims

1. A method for controlling a motor (3) for an electrically assisted bicycle, comprising:
estimating a relationship between a vehicle speed and a pedal force under constant riding conditions;
calculating an input voltage (4) to the motor (3) beforehand according to the vehicle speed such that an assist ratio is compliant with a standard for the vehicle speed;
measuring the vehicle speed;
providing motor assistance according to the pedal force while fixing, to a first voltage, the input voltage (4) to the motor (3) in a low-speed region where a constant assist ratio is specified by the standard;
changing the input voltage (4) from a second voltage to a third voltage in proportion to the vehicle speed in a vehicle-speed region serving as a high-speed gradual decrease part of the standard; and
stopping a motor output (5) by fixing the input voltage (4) to the third voltage in a region having a higher vehicle speed than the high-speed gradual decrease part,
**characterized in that** the first voltage is a maximum output voltage of the motor (3), and the third voltage allows the motor output (5) to become 0 at a maximum vehicle speed of the high-speed gradual decrease part.

2. The method for controlling a motor (3) for an electrically assisted bicycle according to claim 1, **characterized in that** the vehicle speed is determined according to a rotational speed of one of a wheel and a pedal of the bicycle.

3. A device for controlling a motor for an electrically assisted bicycle, comprising:
a motor (3) that assists driving of the bicycle;
a speed sensor (1) that measures a vehicle speed; and
a voltage control unit (2) that controls an input voltage (4) to the motor (3) according to the vehicle speed, the voltage control unit (2) being adapted to fix, to a first voltage, the input voltage (4) to the motor (3) in a low-speed region where a constant assist ratio is specified by a standard for the vehicle speed, the voltage control unit (2) further being adapted to change the input voltage (4) from a second voltage to a third voltage in proportion to the vehicle speed in a vehicle-speed region serving as a high-speed gradual decrease part of the standard,
**characterized in that** a motor output (5) is controlled by the input voltage (4) to an output satisfying an assist ratio specified by a standard, according to a pedal force estimated from the vehicle speed, wherein the first voltage is a maximum output voltage of the motor (3), and the third voltage allows the motor output (5) to become 0 at a maximum vehicle speed of the high-speed gradual decrease part.

4. The device for controlling a motor for an electrically assisted bicycle according to claim 3, **characterized in that** the speed sensor (1) includes a rotation sensor that measures a rotational speed of one of a wheel and a pedal of the bicycle or a rotational speed of the motor (3), and the vehicle speed is calculated from the rotational speed.

## Patentansprüche

1. Ein Verfahren zum Steuern eines Motors (3) eines elektrisch unterstützten Fahrrads, das umfasst:
Abschätzen eines Zusammenhangs zwischen einer Fahrzeuggeschwindigkeit und einer Pedalkraft unter konstanten Fahrbedingungen;
im Voraus Berechnen einer Eingangsspannung (4) des Motors (3) entsprechend der Fahrzeuggeschwindigkeit, so dass ein Unterstützungsanteil konform mit einer Vorgabe der Fahrzeuggeschwindigkeit ist;
Messen der Fahrzeuggeschwindigkeit;
Beistellen von Motorunterstützung entsprechend der Pedalkraft, während die Eingangsspannung (4) des Motors (3) auf eine erste Spannung in einem Niedriggeschwindigkeitsbereich festgelegt wird, wo ein konstanter Unterstützungsanteil durch die Vorgabe spezifiziert ist;
Ändern der Eingangsspannung (4) von einer zweiten Spannung zu einer dritten Spannung im Verhältnis zu der Fahrzeuggeschwindigkeit in einem Fahrzeuggeschwindigkeitsbereich, der als ein Teil einer sukzessiven Hochgeschwindigkeitsverringerung der Vorgabe dient; und
Stoppen einer Motorleistung (5) durch Festlegen der Eingangsspannung (4) auf die dritte Spannung in einem Bereich, der eine höhere Fahrzeuggeschwindigkeit hat als der Teil der sukzessiven Hochgeschwindigkeitsverringerung,
**dadurch gekennzeichnet, dass** die erste Spannung eine maximale Ausgangsspannung des Motors (3) ist und die dritte Spannung zulässt, dass die Motorleistung (5) bei einer maximalen Fahrzeuggeschwindigkeit des Teils der sukzessiven Hochgeschwindigkeitsverringerung Null wird.

2. Das Verfahren zum Steuern eines Motors (3) eines elektrisch unterstützten Fahrrads nach Anspruch 1, **dadurch gekennzeichnet, dass** die Fahrzeuggeschwindigkeit entsprechend einer Drehzahl eines Rads oder einer Pedale des Fahrrads ermittelt wird.

3. Eine Vorrichtung zum Steuern eines Motors eines elektrisch unterstützten Fahrrads mit:
einem Motor (3), der ein Antreiben des Fahrrads unterstützt;
einem Geschwindigkeitssensor (1), der eine Fahrzeuggeschwindigkeit misst; und
einer Spannungssteuereinheit (2), die eine Eingangsspannung (4) des Motors (3) entsprechend der Fahrzeuggeschwindigkeit steuert, wobei die Spannungssteuereinheit (2) ausgebildet ist, die Eingangsspannung (4) des Motors (3) auf eine erste Spannung in einem Niedriggeschwindigkeitsbereich festzulegen, wo ein konstanter Unterstützungsanteil durch eine Vorgabe der Fahrzeuggeschwindigkeit spezifiziert ist, wobei die Spannungssteuereinheit (2) weiter dazu ausgebildet ist, die Eingangsspannung (4) von einer zweiten Spannung zu einer dritten Spannung im Verhältnis zu der Fahrzeuggeschwindigkeit in einem Fahrzeuggeschwindigkeitsbereich zu ändern, der als ein Teil der sukzessiven Hochgeschwindigkeitsverringerung der Vorgabe dient,
**dadurch gekennzeichnet, dass** eine Motorleistung (5) durch die Eingangsspannung (4) zu einer Leistung gesteuert wird, die einen Unterstützungsanteil erfüllt, der durch eine Vorgabe spezifiziert ist, entsprechend einer Pedalkraft, die von der Fahrzeuggeschwindigkeit abgeschätzt ist, wobei die erste Spannung eine maximale Ausgangsspannung des Motors (3) ist und die dritte Spannung zulässt, dass die Motorleistung (5) bei einer maximalen Fahrzeuggeschwindigkeit in dem Teil der sukzessiven Hochgeschwindigkeitsverringerung Null wird.

4. Die Vorrichtung zum Steuern eines Motors eines elektrisch unterstützten Fahrrads nach Anspruch 3, **dadurch gekennzeichnet, dass** der Geschwindigkeitssensor (1) einen Drehwinkelsensor umfasst, der eine Drehzahl eines Rads oder eines Pedals des Fahrrads oder eine Drehzahl des Motors (3) misst und die Fahrzeuggeschwindigkeit aus der Drehzahl berechnet wird.

## Revendications

1. Procédé de contrôle d'un moteur (3) pour une bicyclette à assistance électrique, comprenant :
l'estimation d'une relation entre une vitesse du véhicule et une force exercée sur les pédales sous conditions de conduite constantes ;
le calcul d'un tension d'entrée (4) pour le moteur (3) à l'avance en fonction de la vitesse du véhicule de telle sorte qu'un ratio d'assistance est conforme à une norme pour la vitesse du véhicule ;
la mesure de la vitesse du véhicule ;
la fourniture d'une assistance moteur conformément à la force exercée sur les pédales tout en fixant à une première tension la tension d'entrée (4) du moteur (3) dans une plage de basse vitesse où un ratio d'assistance constant est spécifié par la norme ;
la modification de la tension d'entrée (4) d'une deuxième tension à une troisième tension proportionnellement à la vitesse du véhicule dans une plage de vitesse du véhicule correspondant à une partie de décélération graduelle à haute vitesse de la norme ; et
l'arrêt d'une sortie du moteur (5) en fixant la tension d'entrée (4) à la troisième tension dans une plage où la vitesse du véhicule est supérieure à celle de la partie de décélération graduelle à haute vitesse,
**caractérisé en ce que** la première tension est une tension de sortie maximale du moteur (3), et la troisième tension permet à la sortie du moteur (5) d'atteindre 0 à une vitesse maximale du véhicule de la partie de décélération graduelle à haute vitesse.

2. Procédé de contrôle d'un moteur (3) pour une bicyclette à assistance électrique selon la revendication 1, **caractérisé en ce que** la vitesse du véhicule est déterminée en fonction d'une vitesse de rotation d'un élément parmi une roue et une pédale de la bicyclette.

3. Dispositif de contrôle d'un moteur pour une bicyclette à assistance électrique, comprenant :
un moteur (3) qui assiste la conduite de la bicyclette ;
un capteur de vitesse (1) qui mesure une vitesse du véhicule ; et
une unité de commande de tension (2) qui contrôle une tension d'entrée (4) du moteur (3) conformément à la vitesse du véhicule, l'unité de commande de tension (2) étant adaptée pour fixer à une première tension la tension d'entrée (4) du moteur (3) dans une plage de basse vitesse où un ratio d'assistance constant est spécifié par une norme pour la vitesse du véhicule, l'unité de commande de tension (2) étant en outre adaptée pour changer la tension d'entrée (4) d'une deuxième tension à une troisième tension proportionnellement à la vitesse du véhicule dans une plage de vitesse du véhicule correspondant à une partie de décélération graduelle à haute vitesse de la norme,
**caractérisé en ce qu'**une sortie du moteur (5) est contrôlée par la tension d'entrée (4) à une sortie répondant à un ratio d'assistance spécifié par une norme, conformément à une force exercée sur les pédales estimée à partir de la vitesse du véhicule, dans lequel la première tension est une tension de sortie maximale du moteur (3), et la troisième tension permet à la sortie du moteur (5) d'atteindre 0 à une vitesse maximale du véhicule de la partie de décélération graduelle à haute vitesse.

4. Dispositif de contrôle d'un moteur pour une bicyclette à assistance électrique selon la revendication 3, **caractérisé en ce que** le capteur de vitesse (1) comprend un capteur de rotation qui mesure une vitesse de rotation d'un élément parmi une roue et une pédale de la bicyclette ou une vitesse de rotation du moteur (3), et la vitesse du véhicule est calculée à partir de la vitesse de rotation.
